# EUROPEAN PATENT APPLICATION

(11) **EP 1 978 699 A1**
(43) Date of publication of application: **08.10.2008**
(21) Application number: 06804958.4
(22) Date of filing: 17.10.2006
(51) Int. Cl.: H04L 29/06

(54) **DYNAMIC FLOW CONTROL METHOD AND SYSTEM**

(30) Priority: 25.01.2006 CN 200610033406
(71) Applicant: Huawei Technologies Co., Ltd., Longgang District Shenzhen 518129 (CN)
(72) Inventor: ZHANG, Keliang, Shenzhen, Guangdong 518129 (CN); MEI, Liubo, Shenzhen, Guangdong 518129 (CN)
(74) Representative: Casalonga, Axel
(86) International application number: PCT/CN2006/002739
(87) International publication number: WO 2007/085158

(57) **Abstract**

The present invention provides a method for dynamic flow control, including the steps of: A. a subscriber equipment prioritizing an uplink data flow and sending the prioritized uplink data flow to an access node; and B. after receiving the data flow sent from the subscriber equipment, the access node classifying the data flow according to the priorities of the data flow in which data flows with the same priority are classified into the same flow tunnel, and performing flow control on a flow tunnel according to a flow control strategy delivered by a flow strategy control system. The present invention also provides a system for dynamic flow control, including a subscriber equipment, an access node and a flow strategy control system. The present invention could simplify the control complexity of an access node and provide a guarantee of QoS for legal data flows.

## Description

### FIELD OF THE INVENTION

The present invention relates to Next-Generation Networks (NGN) technology, and more particularly to a method and system for dynamic flow control.

### BACKGROUND

NGN, as the next-generation network, provides various services including telecommunication services. To speed up the progress of research and standardization of NGN, all of the international standardization organizations are establishing standards for NGN. Telecommunications and Internet converged Services and Protocols for Advanced Networking (TISPAN) is a standardization organization engaging in the research of NGN in European Telecommunications Standards Institute (ETSI), which primarily makes researches on NGN in view of fixed networks.

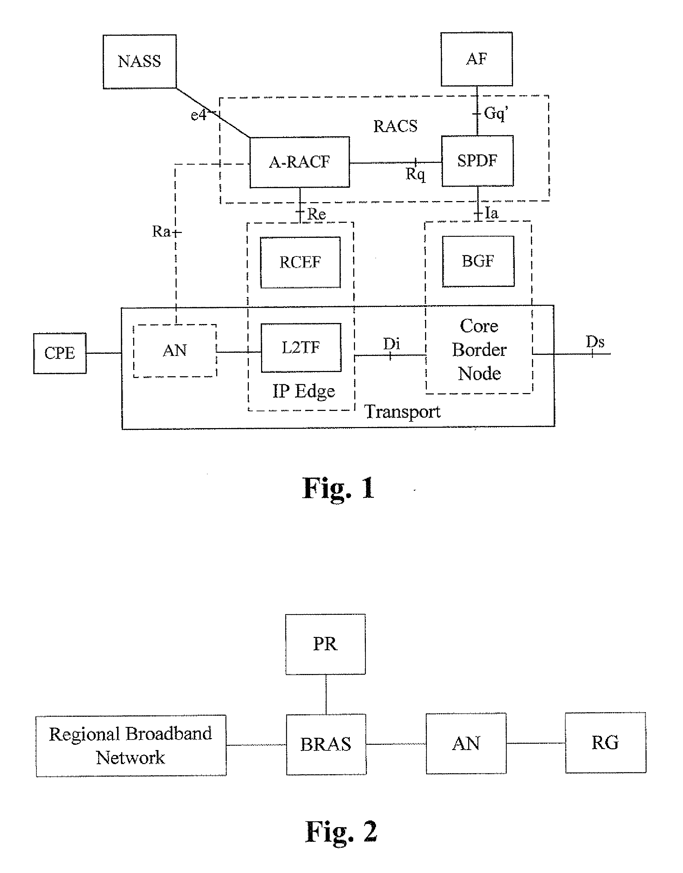

The functional structure of TISPAN NGN includes a service layer and an IP-based transport layer, as shown in Fig.1. Resource and Admission Control Subsystem (RACS) and Network Attachment Subsystem (NASS) belong to the control portion of the transport layer. The transport layer provides IP connectivity to TISPAN NGN terminals under the control of the NASS and RACS.

The RACS primarily defines session-based dynamic flow control functions, in which three control points are defined. The first is Border Gateway Function (BGF). The RACS delivers a flow strategy through the Ia interface and controls the BGF to accomplish the flow control function of this point. The second is Resource Control Enforcement Function (RCEF). The RACS determines whether to allow a new session to access according to the topology of the access network, delivers a flow strategy through the Re interface, and controls the RCEF to accomplish the access of the session and the flow control function. The third is Access Node (AN). The RACS controls the AN through the Ra interface. The control on the AN is being under discussion, and it is inexplicit yet whether this control point is required and how it is to be controlled.

One viewpoint supports that the Ra interface is required so that session-based precise flow control of the RACS could be delivered to the AN to realize precise flow control on the whole network. However, this greatly increases the control complexity of the AN and results in higher cost of the AN, such as higher cost of Digital Subscriber Line Access Multiplexer (DSLAM), which violates the current trend of simplifying the access network in the related field.

Another viewpoint supports that the Ra interface is not required and no flow control is performed on the AN. However, this also causes a severe problem, i.e., if a malicious Customer Premise Equipment (CPE) continuously sends data flows with higher priorities that have not been authenticated, the network between the RCEF and the AN might be busy in dealing with these unauthenticated illegal data, thus being unable to provide guaranteed bandwidth to accessed data flows having passed the RACS authentication, and thus being unable to provide a guarantee of Quality of Service (QoS) for legal data flows.

Another scheme is proposed by the DSL forum. The flow strategy control model proposed by the DSL forum is shown in Fig.2. The strategy execution points are Broadband Remote Access Server (BRAS) and Residential Gateway (RG), in which the BRAS is equivalent to the RCEF in Fig.1, the RG is equivalent to the CPE in Fig.1, and the Policy Repository (PR) is equivalent to the RACS in Fig.1. The flow strategy control model proposed by the DSL forum turns the control on the AN to the RG, delivers the precise control strategy for flows to the RG, and controls the source of data flows. Because the control on the AN is simplified by this model, and it is not required in the AN a complex flow strategy control mechanism except for the need to forward uplink data flows sent from the RG, the model is a relatively ideal model, which is also the best in terms of flow control. However, because the RG is a subscriber equipment locating at the user side, it is actually impossible to control a malicious RG, which causes, by sending unauthenticated data flows, the network between the RG and the BRAS unable to provide a guarantee of QoS for legal data flows.

### SUMMARY

In view of the above description, an object of the present invention is to provide a method and system for dynamic flow control, so as to simplify the control complexity of an access node and provides a guarantee of QoS for legal data flows.

To achieve the above object, the present invention provides a method for dynamic flow control, including the steps of; A. a subscriber equipment prioritizing an uplink data flow and sending the prioritized uplink data flow to an access node; and B. after receiving the data flow sent from the subscriber equipment, the access node classifying the data flow according to the priorities of the data flow in which data flows with the same priority are classified into the same flow tunnel, and performing flow control on a flow tunnel according to a flow control strategy delivered by a flow strategy control system.

The flow control strategy delivered by the flow strategy control system is a flow tunnel-based flow control strategy.

The flow control strategy includes gate-control. Performing flow control on the flow tunnel according to the flow control strategy includes: the access node controlling the turn-on and turn-off of the flow tunnel corresponding to the gate-control according to the gate-control delivered by the flow strategy control system.

The flow control strategy includes the maximum bandwidth. Performing flow control on the flow tunnel according to the flow control strategy includes: the access node controlling the maximum flow of the flow tunnel corresponding to the maximum bandwidth not to be larger than the maximum bandwidth delivered by the flow strategy control system.

The flow control strategy includes the minimum bandwidth. Performing flow control on the flow tunnel according to the flow control strategy includes: the access node controlling the minimum flow of the flow tunnel corresponding to the minimum bandwidth not to be less than the minimum bandwidth delivered by the flow strategy control system.

The flow control strategy delivered by the flow strategy control system is a session-based flow control strategy. Performing flow control on the flow tunnel according to the flow control strategy includes: the access node combining flow control strategies of session flows with the same priority, and performing flow control on the flow tunnel corresponding to the priority according to the combined flow control strategy.

The flow control strategy is delivered dynamically by the flow strategy control system according to the result of a service authentication.

The subscriber equipment is a customer premise equipment CPE or a residential gateway RG.

The flow strategy control system is a resource and admission control subsystem RACS or a policy repository PR.

The present invention provides a system for dynamic flow control, including a subscriber equipment, an access node and a flow strategy control system.

The subscriber equipment is configured to prioritize an uplink data flow and send the prioritized uplink data flow to the access node. The access node is configured to receive the data flow sent from the subscriber equipment, classify the data flow according to the priorities of the data flow in which data flows with different priorities are classified into different flow tunnels, and perform flow control on a flow tunnel according to a flow control strategy delivered by the flow strategy control system. The flow strategy control system is configured to deliver the flow control strategy.

The subscriber equipment is a customer premise equipment CPE or a residential gateway RG.

The flow strategy control system is a resource and admission control subsystem RACS or a policy repository PR.

It can be seen from the above schemes that the present invention has the following beneficial effects.

1) A subscriber equipment prioritizes an uplink data flow, and an access node classifies data flows with the same priority into the same flow tunnel and performs flow control on respective flow tunnels according to a flow control strategy delivered by a flow strategy control system. That is, the access node performs coarse-tunnel flow control based on the priority of a service, instead of performing session-based precise flow control, and thus the control complexity of an access node is simplified. Moreover, performing flow control at the lastmile network controllable node, such as an access node, could provide a guarantee of QoS for legal data flows to some extent.

2) Through gate-control performed by an access node on flow tunnels with different priorities, a malicious subscriber equipment could not continuously send data flows with higher priorities to an access network, thus providing a guarantee of QoS for legal services which require guaranteed bandwidth.

3) Through limiting, by an access node, the maximum flow, i.e., the maximum bandwidth, of data flows sent from a subscriber equipment, it is ensured that a guarantee of QoS could be provided by an access network for legal services which require guaranteed bandwidth.

4) An access node could perform flow control according to the minimum bandwidth delivered by a flow strategy control system, thus meeting the minimum bandwidth requirement of services which require guaranteed bandwidth and providing a guarantee of QoS for the services.

### BRIEF DESCRIPTION OF THE DRAWING(S)

Fig.1 is a schematic diagram illustrating the structure of TISPAN NGN.

Fig.2 is a schematic diagram illustrating the flow strategy control model proposed by the DSL forum.

Fig.3 is a flow chart of a method for dynamic flow control according to an embodiment of the present invention.

Fig.4 is a schematic diagram illustrating the structure of a system for dynamic flow control according to an embodiment of the present invention.

Fig.5 is a flow chart of a method for dynamic flow control according to an embodiment of the present invention.

### DETAILED DESCRIPTION

To make the objects, technical solutions and advantages of the present invention more distinct, the present invention is further illustrated below by reference to the accompanying drawings and embodiments.

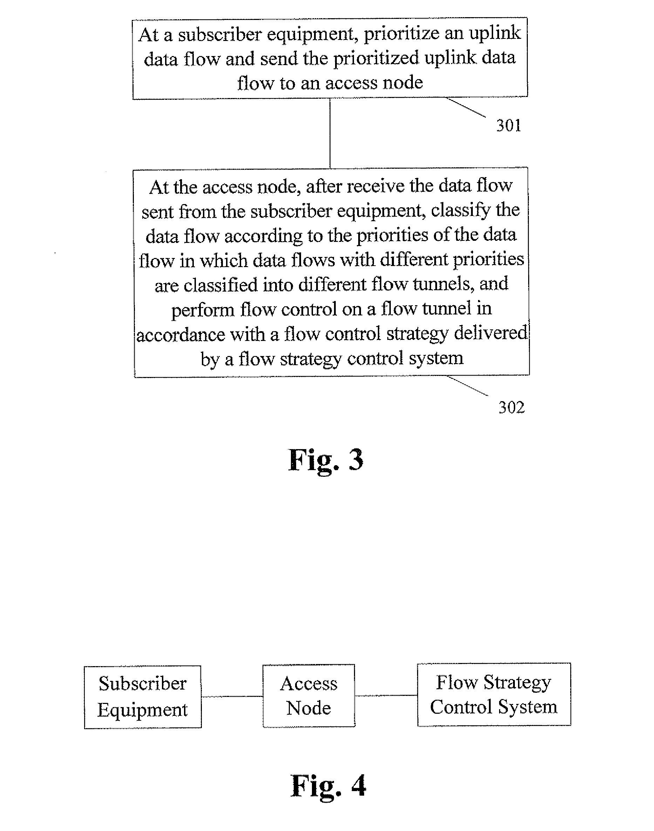

Referring to Fig.3, a method for dynamic flow control provided by the present invention mainly includes the following steps.

Step 301: A subscriber equipment prioritizes an uplink data flow and sends the prioritized uplink data flow to an access node.

Step 302: After receiving the data flow sent from the subscriber equipment, the access node classifies the data flow according to the priorities of the data flow in which data flows with the same priority are classified into the same flow tunnel, and performs flow control on a flow tunnel according to a flow control strategy delivered by a flow strategy control system.

In correspondence with the method for dynamic flow control provided by the present invention, an embodiment of the present invention also provides a system for dynamic flow control, shown in Fig.4, including a subscriber equipment, an access node and a flow strategy control system.

The subscriber equipment is configured to prioritize an uplink data flow and send the prioritized uplink data flow to the access node. The access node is configured to receive the data flow sent from the subscriber equipment, classify the data flow according to the priorities of the data flow in which data flows with different priorities are classified into different flow tunnels, and perform flow control on a flow tunnel according to a flow control strategy delivered by the flow strategy control system. The flow strategy control system is configured to deliver the flow control strategy.

The subscriber equipment is a customer premise equipment (CPE) or a residential gateway RG. The flow strategy control system is a Resource and Admission Control Subsystem (RACS) or a Policy Repository (PR).

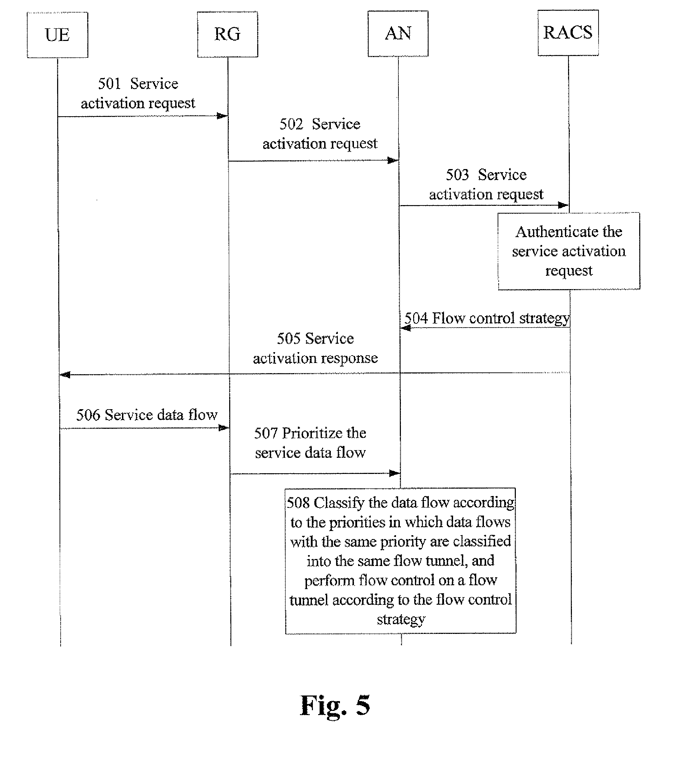

Taking the case in which the subscriber equipment is a RG and the flow strategy control system is a RACS for example and combining with the system shown in Fig.4, the method for dynamic flow control of the present invention is illustrated in detail below, detailed process of which is shown in Fig.5. This embodiment mainly includes the following steps.

Step 501: A user sends a service activation request to a RG through a User Equipment (UE).

Step 502: The RG sends the received service activation request from the UE to an AN, and prioritizes the data flow of this service activation request.

Step 503: After receiving the service activation request from the RG, the AN performs scheduling according to the priority and forwards the received service activation request to a RACS.

Step 504: The RACS authenticates the received service activation request, and after the authentication is passed, delivers a flow control strategy to the AN through the Ra interface.

Herein, the RACS could establish the flow control strategy corresponding to the service according to the characteristics of the service.

Steps 501 to 504 are detailed process of delivering the flow control strategy by the RACS. That is, the flow control strategy is delivered dynamically by a system for flow strategy control according to the result of the service authentication.

Step 505: The RACS sends a service activation response to the UE after the authentication is passed.

Step 506: The UE sends a service data flow to the RG.

Step 507: After receiving the uplink data flow sent from the UE, the RG prioritizes the uplink data flow and sends the prioritized uplink data flow to the AN.

Step 508: After receiving the data flow sent from the RG, the AN classifies the data flow according to the priorities of the data flow in which data flows with the same priority are classified into the same flow tunnel, and performs flow control on a flow tunnel according to the flow control strategy delivered by the RACS.

The flow control described here is mainly based on the link port. For data flows from respective ports, the AN classifies them into different flow tunnels according to their priorities, in which each priority corresponds to a flow tunnel and flow tunnels between different ports are irrelevant from each other. For example, if data flows from one port have eight priorities, then this port has eight flow tunnels. The AN might use flow tunnels with higher priorities for transferring services that require guaranteed bandwidth, and use flow tunnels with lower priorities for transferring best-effort delivery services. For example, four flow tunnels with higher priorities are used for transferring services that require guaranteed bandwidth, and four flow tunnels with lower priorities are used for transferring best-effort delivery services.

When delivering the flow control strategy to the AN, the RACS needs to assign the port number of the logical circuit for which the delivered flow control strategy is applied and the priority of the data flow. That is, the flow control strategy delivered by the flow strategy control system is on a flow tunnel basis. As a result, the AN could determine a flow tunnel the received flow control strategy is applied for, and perform flow control on the flow tunnel according to the flow control strategy delivered by the RACS.

The RACS might set gate-control to flow tunnels with one or more priorities. And the AN might control the turn-on and turn-off of the flow tunnel corresponding to the gate-control according to the gate-control delivered by the RACS, i.e., control whether to allow the data of the flow tunnel to access an access network according to the gate-control. For example, the gate-control is delivered for a flow tunnel for transferring services which require guaranteed bandwidth, so as to control the turn-on and turn-off of the flow tunnel, and thus a malicious user is prevented from continuously sending data with higher priorities to the access network. However, the flow tunnel for transferring best-effort delivery services is always turn-on, which needs not the gate-control.

For respective flow tunnels corresponding to different priorities, the RACS could also set the maximum bandwidth allowable by the flow tunnel for accessing. During the transmission of an uplink data flow, the AN controls the maximum flow of the flow tunnel corresponding to the maximum bandwidth not to be larger than the maximum bandwidth delivered by the RACS, so as to make a subscriber equipment unable to send data flows that exceed the authenticated flow, thus ensuring that the access network could provide a guarantee of QoS for services that require guaranteed bandwidth.

For respective flow tunnels corresponding to different priorities, the RACS could also set the minimum bandwidth for ensuring the priority schedule of the flow tunnels. During the transmission of an uplink data flow, the AN controls the minimum flow of the flow tunnel corresponding to the minimum bandwidth not to be less than the minimum bandwidth delivered by the RACS.

Alternately, if the flow control strategy delivered by the flow strategy control system is a session-based flow control strategy, the AN might combine flow control strategies of session flows with the same priority such as sum up the maximum bandwidths and the minimum bandwidths respectively, classify session flows with the same priority into a flow tunnel corresponding to the priority, and perform flow control uniformly on the flow tunnel corresponding to the priority according to the combined flow control strategy, thus simplifying the control complexity of an access node.

It should be noted that although the present invention is primarily described in terms of performing flow control on an access node, the method provided by the present invention is also applicable to other lastmile controllable network nodes.

The above description illustrates the objects, technical solutions and beneficial effects of the present invention in further detail. It should be understood that the above description is not intended to limit the present invention, and any changes, equivalent replacements and improvements made within the spirit and scope of the present invention should be included in the scope of the present invention.

## Claims

1. A method for dynamic flow control, **characterized by** comprising the steps of:
A. prioritizing an uplink data flow and sending the prioritized uplink data flow to an access node by a subscriber equipment; and
B. after receiving the data flow sent from the subscriber equipment, classifying the data flow by the access node according to the priorities of the data flow in which data flows with the same priority are classified into the same flow tunnel, and performing flow control on a flow tunnel according to a flow control strategy delivered by a flow strategy control system.

2. The method according to claim 1, **characterized in that**, the flow control strategy delivered by the flow strategy control system is a flow tunnel-based flow control strategy.

3. The method according to claim 2, **characterized in that**,
the flow control strategy comprises gate-control; and
the performing flow control on the flow tunnel according to the flow control strategy comprises: controlling the turn-on and turn-off of the flow tunnel corresponding to the gate-control by the access node according to the gate-control delivered by the flow strategy control system.

4. The method according to claim 2, **characterized in that**,
the flow control strategy comprises the maximum bandwidth; and
the performing flow control on the flow tunnel according to the flow control strategy comprises: controlling the maximum flow of the flow tunnel corresponding to the maximum bandwidth, by the access node, not to be larger than the maximum bandwidth delivered by the flow strategy control system.

5. The method according to claim 2, **characterized in that**,
the flow control strategy comprises the minimum bandwidth; and
the performing flow control on the flow tunnel according to the flow control strategy comprises: controlling the minimum flow of the flow tunnel corresponding to the minimum bandwidth, by the access node, not to be less than the minimum bandwidth delivered by the flow strategy control system.

6. The method according to claim 1, **characterized in that**,
the flow control strategy delivered by the flow strategy control system is a session-based flow control strategy; and
the performing flow control on the flow tunnel according to the flow control strategy comprises: combining flow control strategies of session flows with the same priority by the access node, and performing flow control on the flow tunnel corresponding to the priority according to the combined flow control strategy.

7. The method according to claim 1, **characterized in that**, the flow control strategy is delivered dynamically by the flow strategy control system according to the result of a service authentication.

8. The method according to any one of claims 1 to 7, **characterized in that**, the subscriber equipment is a Customer Premise Equipment or a Residential Gateway.

9. The method according to any one of claims 1 to 7, **characterized in that**, the flow strategy control system is a Resource and Admission Control Subsystem or a Policy Repository.

10. A system for dynamic flow control, **characterized by** comprising a subscriber equipment, an access node and a flow strategy control system, wherein,
the subscriber equipment is configured to prioritize an uplink data flow and send the prioritized uplink data flow to the access node;
the access node is configured to receive the data flow sent from the subscriber equipment, classify the data flow according to the priorities of the data flow in which data flows with different priorities are classified into different flow tunnels, and perform flow control on a flow tunnel according to a flow control strategy delivered by the flow strategy control system; and
the flow strategy control system is configured to deliver the flow control strategy.

11. The system according to claim 10, **characterized in that**, the subscriber equipment is a Customer Premise Equipment or a Residential Gateway.

12. The system according to claim 10, **characterized in that**, the flow strategy control system is a Resource and Admission Control Subsystem or a Policy Repository.
